# EUROPEAN PATENT SPECIFICATION

(11) **EP 1 201 903 B1**
(45) Date of publication and mention of the grant of the patent: **13.04.2011**
(21) Application number: 00850174.4
(22) Date of filing: 25.10.2000
(51) Int. Cl.: F02D 41/38, F02D 37/02, F02B 1/12, F01L 9/04

(54) **Method of controlling the combustion process in an internal combustion engine and an engine with means for controlling the engine valves**
Verfahren zur Regelung eines Verbrennungsvorgangs in einer Verbrennungskraftmaschine mit Mitteln zur Ventilsteuerung
Methode pour contrôler le processus de combustion d'un moteur à combustion interne avec moyens de commande des soupapes

(43) Date of publication of application: 02.05.2002
(73) Proprietor: Ford Global Technologies, Inc., Dearborn, Michigan 48126 (US)
(72) Inventor: Koopmans, Lucien, 436 54 Hovas (SE)
(74) Representative: Börlin, Maria

(56) References cited:
- EP-A- 1 052 391
- WO-A-00/28197
- US-A- 6 105 550

## Description

The present invention relates to a method of controlling the combustion process in the combustion chamber of a four-stroke internal combustion engine, according to the preamble of claim 1..

The invention also relates to a four-stroke internal combustion engine, according to the preamble of claim 7.

WO 00/28197 describes a method and shows and describes an engine of the above type which has an upper engine speed limit of about 6 000 rpm. Compression ignition of a homogeneous fuel/air mixture, so-called HCCI (Homogeneous Charge Compression Ignition) is used within the lower rpm range from start-up to circa 3 000-4 000 rpm. When this limit is exceeded, the ignition system is activated at the same time as the control of the exhaust and inlet valves switches to normal engine operation, i.e. the exhaust valve is controlled so that it closes after the piston, during the exhaust stroke, has reached its upper dead center point, at the same time as the inlet valve is controlled so that it begins to open before the exhaust valve is completely closed. During operation in HCCI mode with compression ignition, the residual exhaust gases from the preceding combustion are used to heat up the fuel/air mixture, so that it can compression-ignite. It is very important that the ignition not fail lest there be no residual exhaust to heat up the fuel/air mixture during the subsequent cycle thereby creating a risk that the engine will stop. This is particularly critical at the transition from the higher rpm range with spark ignition to the lower rpm range with compression ignition. There is no residual exhaust to heat with when the engine is started, and therefore the inlet air must be heated in some manner if the engine is to be started in HCCI mode.

One purpose of the present invention is to develop the method described by way of introduction for controlling the combustion process, so that the greatest possible running reliability is achieved, particularly at the transition from spark ignition to compression ignition.

This is achieved according to the method of claim 1 and to the four-stroke internal combustion engine of claim 7..

By resetting, at the transition from spark ignition to compression ignition, the exhaust valve so rapidly that, at the very next work cycle immediately subsequent to the last spark ignition cycle, it is set for compression operation, i.e. it closes substantially earlier than in the preceding cycle, it is assured that the fuel/air mixture will be sufficiently hot to be able to be compression-ignited.

According to the invention, the combustion is monitored to detect any ignition failure. If missed ignition is detected, the spark ignition means are activated and the exhaust valve is adjusted from early closing, before the piston has reached its upper dead center point, to later ignition closer to the dead center point from one work cycle to the next. Maximum operational reliability during compression ignition operation is obtained thereby.

In an additional further development of the method according to the invention, the spark ignition means are activated and the exhaust valve is controlled for later closing at engine start. Subsequent to start, the spark ignition means are deactivated and the exhaust valve is adjusted for earlier closing from one work cycle to the next.

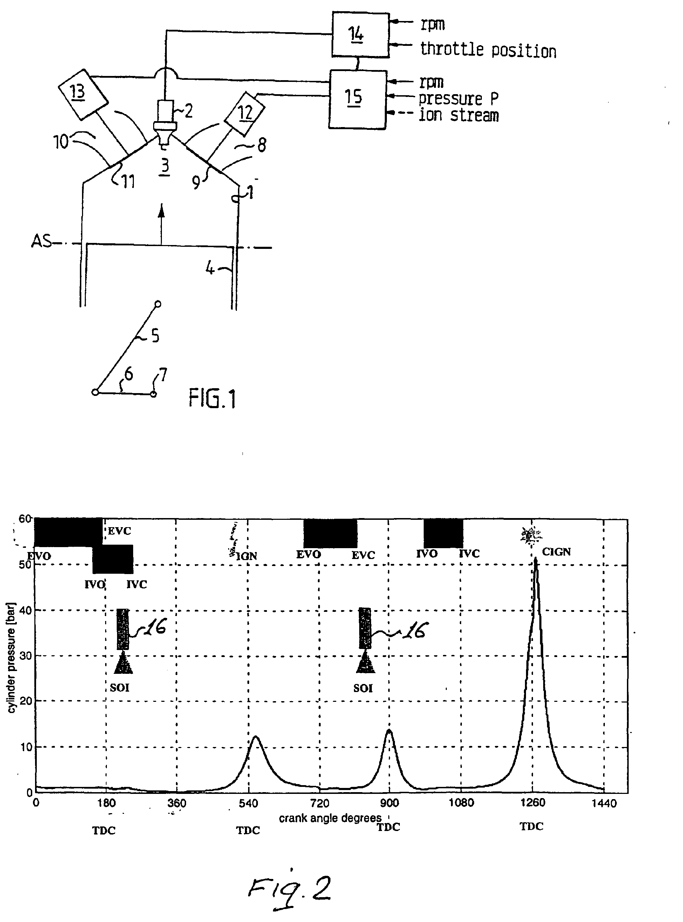

The method according to the invention will be described below in more detail with reference to examples shown in the accompanying drawing, where Fig. 1 shows schematically a cylinder with a piston in a four-stroke internal combustion engine, and Fig. 2 shows a diagram of the control of valves, fuel injection and ignition over two subsequent work cycles.

In Fig. 1, 1 designates a cylinder in the engine block of a four-stroke internal combustion engine, which in the example shown is an Otto engine, having a spark plug 2 projecting into the combustion chamber 3. The cylinder 1 has a piston 4, which is connected via a connecting rod 5 to a throw 6 on the crankshaft 7. The combustion chamber 3 has an inlet 8 for supply of air. Fuel is supplied through an injector 16 (Fig. 2), which can be arranged to inject fuel into the inlet conduit for mixing fuel into the inlet air in the inlet conduit, but is preferably arranged to inject the fuel directly into the combustion chamber (GDI, Gasoline Direct Injection). An inlet valve 9 is arranged in the inlet port of the combustion chamber. An exhaust valve 11 is arranged in an outlet port to an exhaust conduit 10.

The opening and closing of the inlet and exhaust valves 9 and 11 are electromagnetically controlled with the aid of electromagnetic devices 12 and 13, respectively.

The valves can be of a type which is known per se with a valve spindle, joined to a metal disc located between two electromagnets. The electromagnets are magnetized alternatingly and the metal disc is drawn towards that magnet which is currently magnetized. With electromagnetically controlled valves of this known type, the opening and closing of the valves can be freely controlled, both from cycle to cycle and for individual cylinders. The sparkplug 2 is joined to an ignition system 14 with a control unit, into which signals representing among other things engine rpm and accelerator pedal position are fed for controlling the ignition as a function of engine rpm and load. The electromagnets 12, 13 of the valves 9, 11 are controlled by a control unit 15, into which there is fed a signal from a sensor (not shown), which directly or indirectly measures the pressure P in the cylinder chamber, and/or a signal representing the ion flow. This signal can be obtained with the sparkplug as a sensor. With the aid of the pressure sensor and/or the ion flow sensor, the combustion process is monitored in the combustion chambers of the cylinders.

In the diagram in Fig. 2, the curve indicates the pressure in the combustion chamber over two consecutive cycles, the first cycle illustrating "normal" engine operation, i.e. with spark ignition, e.g. within an upper rpm range, e.g. from circa 4 000 to 6 000 rpm, and the second illustrating operation with compression ignition, e.g. within the lower rpm range, from start-up to circa 4 000 rpm. The abbreviations used in the diagram have the following meanings:
EVO = Exhaust Valve Opening,
EVC = Exhaust Valve Closing,
IVO = Inlet Valve Opening,
IVC = Inlet Valve Closing,
SOI = Start Of Injection,
IGN = Ignition Spark,
TDC = Top Dead Center,
CIGN = Compression Ignition with spark option.

The diagram in Fig. 2 illustrates, from the left, one working cycle with spark ignition, which is in operation at start, when the engine is running in the upper rpm range or when ignition failure occurs within the lower rpm range. In this case the exhaust valve 11 closes approximately at the top dead center point TDC during the exhaust stroke, and the inlet valve 9 opens shortly before the exhaust valve closes. The fuel injection SOI starts during the inlet stroke before the inlet valve closes. The ignition IGN takes place at the end of the compression stroke.

The subsequent working cycle in the diagram illustrates operation with compression ignition, for example after start at engine speeds within the lower rpm range. As can be seen, the exhaust valve closes relatively early before the top dead center point, to enclose a greater amount of residual exhaust in the combustion chamber than during the preceding cycle. The fuel injection starts in this case after the exhaust valve has been closed and before the inlet valve opens, resulting in a homogeneous fuel/air mixture adapted to compression ignition at top dead center, TDC. As can be seen in the diagram in Fig. 2, the exhaust valve 11 is controlled so that, at the transition between the two different operational modes of the engine, its opening and closing times are changed from one cycle to the next. In other words, the resetting takes place within two revolutions of the crankshaft (one working cycle). As can be seen in the diagram in Fig. 2, the opening and closing times of the inlet valve 9 are also changed during the transition between the two operational modes of the engine. In this case as well, the change is effected from one cycle to the next, i.e. within two revolutions of the crankshaft.

## Claims

1. Method of controlling the combustion process in the combustion chamber of a four-stroke internal combustion engine with at least one cylinder having means for spark ignition of a fuel/air mixture in the combustion chamber and at least one inlet valve and one exhaust valve, comprising: supply of fuel and air to the combustion chamber; control of the exhaust valve so that the amount of residual gas at closing of the exhaust valve varies depending on various control parameters, such as rpm and load; and control of the spark ignition means so that they are kept deactivated to permit compression of the fuel/air mixture to self-ignition, or are activated as a function of said control parameters to spark-ignite the fuel/air mixture; from one work cycle to the next, the spark ignition means are activated or deactivated and the exhaust valve is adjusted from a certain early closing before the piston has reached its top dead center point towards later closing closer to the top dead center point at transition from compression ignition to spark ignition, and vice versa at transition from spark ignition to compression ignition, , **characterized in that** the combustion process is monitored and that, if missed ignition is detected, the spark ignition means are activated and the exhaust valve is adjusted from a certain early closing before the piston has reached its top dead center point towards later closing closer to the top dead center point, from one working cycle to the next.

2. Method according to Claim 1 **characterized in that** the spark ignition means are activated and the exhaust valve is adjusted towards later closing at the start of the engine and that, after start, the spark ignition means are deactivated and the exhaust valve is adjusted towards earlier closing, from one working cycle to the next.

3. Method according one of Claims 1-2, **characterized in that** the fuel is injected directly into the combustion chamber.

4. Method according to Claim 3, **characterized in that** the fuel is injected during the exhaust stroke after the closing of the exhaust valve but prior to opening of the inlet valve, to achieve a homogeneous fuel/air mixture adapted to compression ignition.

5. Method according to one of Claims 1-4, **characterized in that** gasoline is used as fuel.

6. Method according to one of Claims 1-5, **characterized in that** electromagnets are used to control the valves.

7. Four-stroke internal combustion engine with at least one cylinder, an ignition system with at least one sparkplug for each cylinder and an ignition control device, which is coupled at least to a tachometer, to at least one inlet valve and one exhaust valve, means for supplying fuel and air to the combustion chamber, a control unit for controlling the exhaust valve as a function of various control parameters such as, for example, engine speed and load, so that the amount of residual gas at the closing of the valve varies, the ignition control device being disposed to keep the sparkplug deactivated to permit compression of the fuel/air mixture to self-ignition, or to keep the sparkplug activated to spark-ignite the fuel/air mixture as a function of said control parameters; the ignition control device and said control unit are arranged to effect, from one work cycle to the next, activation or deactivation of the sparkplug and adjust the exhaust valve from a certain early closing before the piston has reached its top dead center point towards later closing closer to the top dead center point at transition from compression ignition to spark ignition, and vice versa at transition from spark ignition to compression ignition, **characterized in that** the combustion process is monitored and that, if missed ignition is detected, the spark ignition means are activated and the exhaust valve is adjusted from a certain early closing before the piston has reached its top dead center point towards later closing closer to the top dead center point, from one working cycle to the next.

8. Engine according to Claim 7, **characterized in that** the valves have electromagnets which are coupled to the control unit which controls the electromagnets as a function of various signals fed to the control unit.

9. Engine according to Claim 8, **characterized in that** the control unit is coupled to an ion flow signal sensor arranged in the combustion chamber, said sensor monitoring the combustion process and, if missed ignition is detected, sending a signal to the ignition control device and the control unit to activate the sparkplug and adjust the exhaust valve from a certain early closing before the piston has reached its top dead center point towards later closing closer to the top dead center point.

10. Engine according to Claim 8, **characterized in that** the control unit is coupled to a pressure signal sensor arranged in the combustion chamber.

## Patentansprüche

1. Verfahren zum Steuern des Verbrennungsvorganges in der Brennkammer einer Viertaktbrennkraftmaschine mit zumindest einem Zylinder der Mittel zur Funkenzündung eines Brennstoff/Luftgemisches in der Brennkammer aufweist und mit zumindest einem Einlassventil und einem Auslassventil, umfassend:
Bereitstellen von Brennstoff und Luft an die Brennkammer,
Steuern des Auslassventils, so dass der Betrag an Restgas beim Schließen des Auslassventils in Abhängigkeit von verschiedenen Steuerparametern, wie Drehzahl und Last, variiert, und
Steuern der Funkenzündungsmittel, so dass sie deaktiviert bleiben, um eine Verdichtung des Brennstoff/Luftgemisches zur Selbstzündung zu gestatten, oder als eine Funktion der Steuerparameter zum Funkenzünden des Brennstoff/Luftgemisches aktiviert werden;
wobei von einem Arbeitstakt bis zum nächsten die Funkenzündmittel aktiviert oder deaktiviert werden und das Auslassventil von einem bestimmten frühen Schließen bevor der Kolben seinen oberen Todpunkt erreicht hat in Richtung zu einem späteren Schließen näher an dem oberen Todpunkt beim Übergang von der Verdichtungszündung hin zur Funkenzündung, und umgekehrt beim Übergang von einer Funkenzündung hin zu einer Verdichtungszündung, eingestellt wird,
**dadurch gekennzeichnet, dass**
der Verbrennungsvorgang überwacht wird und dass, falls eine verpasste Zündung erfasst wird, die Funkenzündmittel aktiviert werden und das Auslassventil von einem bestimmten frühen Schließen bevor der Kolben seinen oberen Todpunkt erreicht hat in Richtung eines späteren Schließens näher an dem oberen Todpunkt von einem Arbeitstakt bis zum nächsten eingestellt wird.

2. Verfahren nach Anspruch 1, **dadurch gekennzeichnet, dass** die Funkenzündmittel aktiviert werden und das Auslassventil in Richtung eines späteren Schließens beim Start des Motors eingestellt wird und dass, nach dem Start, die Funkenzündmittel deaktiviert werden und das Auslassventil in Richtung eines späteren Schließens von einem Arbeitszyklus hin zu dem nächsten eingestellt wird.

3. Verfahren nach Anspruch 2, **dadurch gekennzeichnet, dass** der Kraftstoff direkt in die Brennkammer eingespritzt wird.

4. Verfahren nach Anspruch 3, **dadurch gekennzeichnet, dass** der Kraftstoff während des Auslasshubes nach dem Schließen des Auslassventils jedoch vor dem Öffnen des Einlassventils eingespritzt wird, um ein homogenes Brennstoff/Luftgemisch zu erreichen, das an eine Verdichtungszündung angepasst ist.

5. Verfahren nach einem der Ansprüche 1-4, **dadurch gekennzeichnet, dass** Benzin als Brennstoff verwendet wird.

6. Verfahren nach einem der Ansprüche 1-5, **dadurch gekennzeichnet, dass** Elektromagnete zum Steuern der Ventile verwendet werden.

7. Viertaktmotor mit zumindest einem Zylinder, ein Zündsystem mit zumindest einer Zündkerze für jeden Zylinder und eine Zündsteuereinrichtung, die mit zumindest einem Tachometer, mit zumindest einem Einlassventil und einem Auslassventil gekoppelt ist, Mittel zum Bereitstellen von Brennstoff und Luft an die Brennkammer, eine Steuereinheit zum Steuern des Auslassventils als eine Funktion von verschiedenen Steuerparametern, wie beispielsweise Motorgeschwindigkeit und Last, so dass der Betrag an Restgas beim Schließen des Auslassventils variiert,
wobei die Zündsteuereinrichtung angeordnet ist, um die Zündkerze deaktiviert lassen, um eine Verdichtung des Brennstoff/Luftgemisches zur Selbstzündung zu gestatten, oder um die Zündkerze als eine Funktion der Steuerparameter zum Funkenzünden des Brennstoff/Luftgemisches aktiviert lassen;
wobei die Zündsteuereinrichtung und die Steuereinheit angeordnet sind, um von einem Arbeitstakt hin zum nächsten eine Aktivierung oder Deaktivierung der Zündkerze durchzuführen und um das Auslassventil von einem bestimmten frühen Schließen bevor der Kolben seinen oberen Todpunkt erreicht hat in Richtung eines späteren Schließens näher an dem oberen Todpunkt beim Übergang von der Verdzchtungszündung hin zur Funkenzündung und umgekehrt beim Übergang von der Funkenzündung hin zur Verdichtungszündung einzustellen,
**dadurch gekennzeichnet, dass**
der Verbrennungsvorgang überwacht wird und dass, falls eine verpasste Zündung erfasst wird, die Funkenzündmittel aktiviert werden und das Auslassventil von einem bestimmten frühen Schließen bevor der Kolben seinen oberen Todpunkt erreicht hat in Richtung eines späteren Schließens näher an dem oberen Todpunkt von einem Arbeitstakt bis zum nächsten eingestellt wird.

8. Motor nach Anspruch 7, **dadurch gekennzeichnet, dass** die Ventile Elektromagnete aufweisen, die mit der Steuereinheit gekoppelt sind, die die Elektromagnete als eine Funktion verschiedener Signale, die der Steuereinheit zugeführt werden, steuert.

9. Motor nach Anspruch 8, **dadurch gekennzeichnet, dass** die Steuereinheit mit einem Ionenflusssignalsensor, der in der Brennkammer angeordnet ist, gekoppelt ist, wobei der Sensor den Verbrennungsvorgang überwacht und, falls eine verpasste Zündung erfasst wird, ein Signal an die Zündsteuereinrichtung und die Steuereinheit sendet, um die Zündkerze zu aktivieren und um das Auslassventil von einem bestimmen frühen Schließen bevor der Kolben den oberen Todpunkt erreicht hat in Richtung des späteren Schließens näher an dem oberen Todpunkt einzustellen.

10. Motor nach Anspruch 8, **dadurch gekennzeichnet, dass** die Steuereinheit mit einem Drucksignalsensor gekoppelt ist, der in der Brennkammer angeordnet ist.

## Revendications

1. Procédé de commande du processus de combustion dans la chambre de combustion d'un moteur à combustion interne à quatre temps avec au moins un cylindre comportant des moyens pour l'allumage par étincelle d'un mélange carburant/air dans la chambre de combustion et au moins une soupape d'admission et une soupape d'échappement, consistant à : fournir du carburant et de l'air à la chambre de combustion ; commander la soupape d'échappement de sorte que la quantité de gaz résiduel à la fermeture de la soupape d'échappement varie en fonction de divers paramètres de commande, tels que le régime du moteur et la charge ; et commander les moyens d'allumage par étincelle de sorte qu'ils soient maintenus désactivés pour permettre la compression du mélange carburant/air pour son auto-allumage, ou soient activés en fonction desdits paramètres de commande pour allumer par étincelle le mélange carburant/air ; d'un cycle de travail au suivant, les moyens d'allumage par étincelle étant activés ou désactivés et la soupape d'échappement étant ajustée d'une certaine fermeture précoce avant que le piston n'ait atteint son point mort haut vers une fermeture plus tard plus près du point mort haut à la transition de l'allumage par compression à l'allumage par étincelle, et vice versa à la transition de l'allumage par étincelle à l'allumage par compression, **caractérisé en ce que** le processus de combustion est surveillé et **en ce que**, si un raté d'allumage est détecté, les moyens d'allumage par étincelle sont activés et la soupape d'échappement est ajustée d'une certaine fermeture précoce avant que le piston n'ait atteint son point mort haut vers une fermeture plus tard plus près du point mort haut, d'un cycle de travail au suivant.

2. Procédé selon la revendication 1, **caractérisé en ce que** les moyens d'allumage par étincelle sont activés et la soupape d'échappement est ajustée vers une fermeture plus tard au démarrage du moteur et **en ce que**, après le démarrage, les moyens d'allumage par étincelle sont désactivés et la soupape d'échappement est ajustée vers une fermeture plus tôt, d'un cycle de travail au suivant.

3. Procédé selon l'une des revendications 1 et 2, **caractérisé en ce que** le carburant est injecté directement dans la chambre de combustion.

4. Procédé selon la revendication 3, **caractérisé en ce que** le carburant est injecté pendant la course d'échappement après la fermeture de la soupape d'échappement mais avant l'ouverture de la soupape d'admission, pour obtenir un mélange carburant/air homogène adapté pour l'allumage par compression.

5. Procédé selon l'une des revendications 1 à 4, **caractérisé en ce que** de l'essence est utilisée en tant que carburant.

6. Procédé selon l'une des revendications 1 à 5, **caractérisé en ce que** des électroaimants sont utilisés pour commander les soupapes.

7. Moteur à combustion interne à quatre temps avec au moins un cylindre, un système d'allumage avec au moins une bougie pour chaque cylindre et un dispositif de commande d'allumage, qui est couplé au moins à un tachymètre, à au moins une soupape d'admission et une soupape d'échappement, des moyens pour fournir du carburant et de l'air à la chambre de combustion, une unité de commande pour commander la soupape d'échappement en fonction de divers paramètres de commande tels que, par exemple, le régime du moteur et la charge, de sorte que la quantité de gaz résiduel à la fermeture de la soupape varie, le dispositif de commande d'allumage étant disposé pour maintenir la bougie désactivée pour permettre la compression du mélange carburant/air pour son auto-allumage, ou pour maintenir la bougie activée pour allumer par étincelle le mélange carburant/air en fonction desdits paramètres de commande ; le dispositif de commande d'allumage et ladite unité de commande étant agencés pour effectuer, d'un cycle de travail au suivant, l'activation ou la désactivation de la bougie et pour ajuster la soupape d'échappement d'une certaine fermeture précoce avant que le piston n'ait atteint son point mort haut vers une fermeture plus tard plus près du point mort haut à la transition de l'allumage par compression à l'allumage par étincelle, et vice versa à la transition de l'allumage par étincelle à l'allumage par compression, **caractérisé en ce que** le processus de combustion est surveillé et **en ce que**, si un raté d'allumage est détecté, les moyens d'allumage par étincelle sont activés et la soupape d'échappement est ajustée d'une certaine fermeture précoce avant que le piston n'ait atteint son point mort haut vers une fermeture plus tard plus près du point mort haut, d'un cycle de travail au suivant.

8. Moteur selon la revendication 7, **caractérisé en ce que** les soupapes ont des électroaimants qui sont couplés à l'unité de commande qui commande les électroaimants en fonction de divers signaux fournis à l'unité de commande.

9. Moteur selon la revendication 8, **caractérisé en ce que** l'unité de commande est couplée à un capteur de signal de flux ionique agencé dans la chambre de combustion, ledit capteur surveillant le processus de combustion et, si un raté d'allumage est détecté, envoyant un signal au dispositif de commande d'allumage et à l'unité de commande pour activer la bougie et ajuster la soupape d'échappement d'une certaine fermeture précoce avant que le piston n'ait atteint son point mort haut vers une fermeture plus tard plus près du point mort haut.

10. Moteur selon la revendication 8, **caractérisé en ce que** l'unité de commande est couplée à un capteur de signal de pression agencé dans la chambre de combustion.
